# EUROPEAN PATENT SPECIFICATION

(11) **EP 3 501 857 B1**
(45) Date of publication and mention of the grant of the patent: **26.05.2021**
(21) Application number: 18211772.1
(22) Date of filing: 11.12.2018
(51) Int. Cl.: B60C 15/06

(54) **PNEUMATIC TIRE WITH A ROBUST BEAD AREA STRUCTURE**
LUFTREIFEN MIT EINER ROBUSTEN WULSTFLÄCHENSTRUKTUR
PNEU DOTÉ D'UNE STRUCTURE DE ZONE DE TALON ROBUSTE

(30) Priority: 15.12.2017 US 201762599354 P
(43) Date of publication of application: 26.06.2019
(73) Proprietor: The Goodyear Tire & Rubber Company, Akron, OH 44316 (US)
(72) Inventor: KRIER, Jean-Julien Edouard Ghislain, 6600 Bastogne (BE); D'HAMERS, Bernard, 7734 Colmar-Berg (LU); MAUS, Peter Cornelius, 4760 Bullingen (BE); ZHANG, Hao, 9047 Ettelbruck (LU); SONG, Xiaofeng, Dalian (CN)
(74) Representative: Kutsch, Bernd

(56) References cited:
- EP-A2- 0 375 443
- FR-A- 1 234 995
- US-A1- 2005 087 281
- US-A1- 2008 142 139

## Description

### Field of the Invention

The invention relates to pneumatic tires. More particularly, the invention relates to the structure of radial ply tires. Specifically, the invention is directed to a pneumatic radial tire that includes a structure which improves the durability of the bead area of the tire.

### Background of the Invention

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

One of the components of the tire is the bead area. The bead area includes a core, which is an annular tensile member wrapped by ply cords and shaped to fit the wheel rim. Typically, a bead core is integrated into each side of the tire to provide a secure fit of the tire on each side of the wheel rim.

Durability of the bead area of the tire is an item that is sought to be improved in the tire industry. For example, in applications such as short distance delivery in city or urban environments, the frequent starting and stopping of a vehicle such as a truck may create high load conditions on the bead area of the tire.

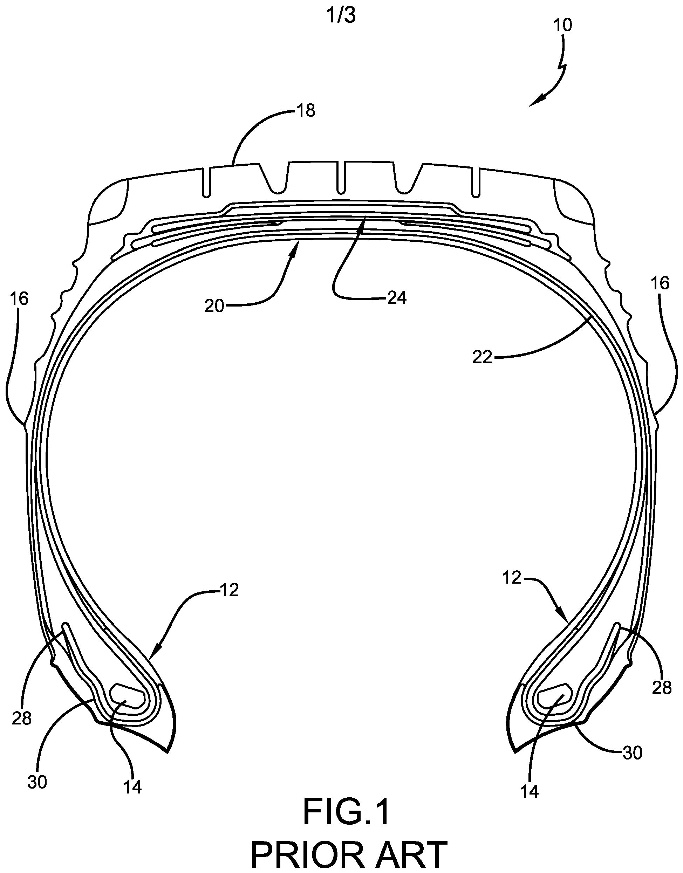

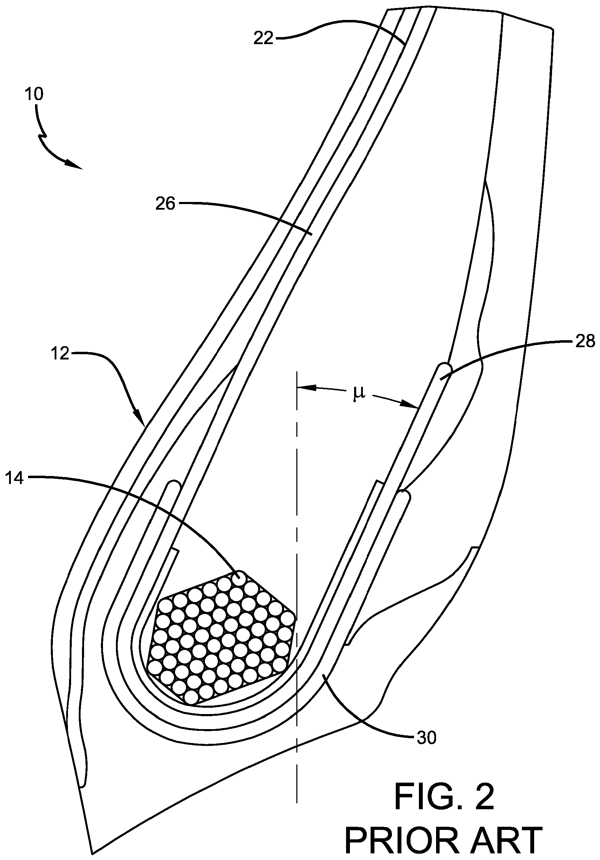

A tire of the prior art is shown in Figures 1 and 2. The tire 10 includes a pair of bead areas 12 and a respective bead core 14 embedded in each bead area. A respective sidewall 16 extends radially outward from each bead area 12 to a ground-contacting tread 18. The tire 10 is reinforced by a carcass 20 that toroidally extends from one of the bead areas 12 to the other one of the bead areas. The carcass 20 includes at least one ply 22 that winds around each bead core 14. A belt reinforcement package 24 is disposed between the carcass 20 and the tread 18. What is conventionally considered a main portion 26 of the carcass reinforcing ply 22 extends radially inward toward the tire rim (not shown) and is turned about each bead core 14 to form a carcass ply turn up 28. The carcass ply turn up 28 extends at a single angle µ relative to a radial line tangent to the axially outermost point of the bead core 14 and parallel to the equatorial plane of the tire 10. A chafer 30 is disposed about the radially inward surface of the carcass ply turn up 28 to resist chafing of the tire 10 by the rim.

Due to the configuration and nature of the radial carcass 20, when the tire 10 is expanded, the main portion 26 of the carcass ply 22 is put under tension, pulling the carcass main portion radially outward and the carcass ply turn up 28 radially inward. After inflation and during operation of the tire 10, when the tire is under deflection, the carcass ply 22 is subject to bending forces and the carcass main portion 26 moves radially inward while the carcass turn up 28 moves radially and axially outward. Due to the adhesion relationship between the rubber and the reinforcing cords of the ply 22, the rubber surrounding the carcass main portion 26 and the carcass turn up 28 also is forced to move during both tension and deflection, resulting in the rubber being stressed. The movement of the carcass ply 22 and the surrounding rubber may thus result in cracking of the rubber in each tire bead area 12, thereby potentially decreasing durability of the tire 10.

Therefore, it is desirable to provide a tire that includes a structure that improves the durability of the bead area.

FR-A- 1234995 describes a tire in accordance with the preamble of claim 1.

US-A- 2008/0142139 describes a radial tire, in particular a truck tire, having various chipper layers in the tire bead area. Partially, these chipper layers end radially inwardly of the bead core radially outward end and partially radially outwardly of the bead core radially outward end.

EP-A- 0 375 443 describes further constructions of radial tires with various arrangements of chipper layers in the bead area. The same is also true for US-A-2005/0087281.

### Summary of the Invention

The invention relates to a tire in accordance with claim 1.

Dependent claims refer to preferred embodiments of the invention.

According to the invention, a pneumatic radial tire includes a pair of opposing bead areas, in which each bead area includes a bead core and a bead apex. At least one carcass reinforcing ply includes a turn up at each bead core, and each turn up includes a radially outward end. A pair of chippers is disposed axially inwardly of each turn up outward end, in which the pair of chippers includes a first chipper and a second chipper. The first chipper is disposed axially inwardly of the bead apex, and the second chipper is disposed axially outwardly of the first chipper and axially inwardly of the bead apex. Forces due to deflection of the tire are limited by the pair of chippers to reduce stresses along each turn up.

### Definitions

"Axial" and "axially" mean lines or directions that are parallel to the axis of rotation of the tire.

"Axially inward" and "axially inwardly" refer to an axial direction that is toward the equatorial plane of the tire.

"Axially outward" and "axially outwardly" refer to an axial direction that is away from the equatorial plane of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Chafer" means a layer of reinforcing material around the bead in the rim flange area to prevent chafing of the tire by the rim.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Inboard" and "inboardly" refer to an axial direction that is toward the equatorial plane of the tire.

"Outboard" and "outboardly" refer to an axial direction that is away from the equatorial plane of the tire.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"Radial-ply tire" means a belted or circumferentially-restricted pneumatic tire in which the ply cords which extend from bead to bead are laid at cord angles between 65 to 90 degrees with respect to the equatorial plane of the tire.

### Brief Description of the Drawings

The invention will be described by way of example and with reference to the accompanying drawings, in which:
Figure 1 is a schematic cross-sectional view of an exemplary tire of the prior art;
Figure 2 is an enlarged fragmentary view of a bead area of the tire shown in Figure 1; and
Figure 3 is an enlarged fragmentary view of a bead area of an exemplary embodiment of the tire of the present invention.

Similar numerals refer to similar parts throughout the drawings.

### Detailed Description of Example Embodiments of the Invention

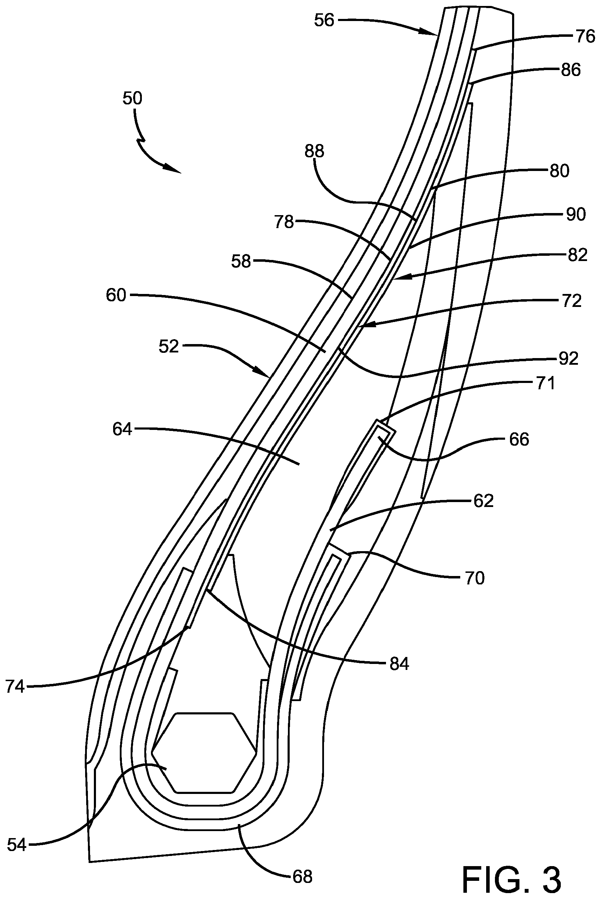

An exemplary embodiment of a tire 50 of the present invention is shown in Figure 3. The general construction of the tire 50 is somewhat similar to that of prior art tire 10, with the principal differences to be described in detail below.

The tire 50 includes a pair of bead areas 52 (only one shown) and a respective bead core 54 embedded in each bead area. A carcass 56 includes at least one ply 58 that preferably winds around each bead core 54. A main portion 60 of the carcass reinforcing ply 58 extends radially inward toward the tire rim (not shown) and is turned about each bead core 54 to form a carcass ply turn up 62. The carcass reinforcing ply 58 is also wrapped about a bead apex 64. In this manner, the carcass reinforcing ply 58 envelopes the bead core 54 and a lower portion of the bead apex 64 in each bead area 52. The carcass ply turn up 62 terminates at a radially outward end 66 and may include an end cap 71. A chafer 68 is preferably disposed about the radially inward surface of the carcass ply turn up 62 to resist chafing of the tire 50 by the rim, and preferably includes an end cap 70.

Axially inward of the carcass ply turn up 62 is an axially inner chipper 72, which is a reinforced layer, as will be described in greater detail below. The axially inner chipper 72 includes a radially inward end 74, a radially outward end 76, an inboard surface 78 and an outboard surface 80. Axially outward of the axially inner chipper 72 is an axially outer chipper 82, which is a reinforced layer, as will be described in greater detail below. The axially outer chipper 82 includes a radially inward end 84, a radially outward end 86, an inboard surface 88 and an outboard surface 90.

The inboard surface 78 of the inner chipper 72 is bonded to or adjacent to an outboard surface 92 of the carcass ply main portion 60 radially outwardly of the bead core 14 and axially inwardly of the ply turn up 62. In this manner, the inner chipper 72 is bonded to or adjacent to the carcass ply main portion 60 on the internal or axially inner side of the bead apex 64. The inboard surface 88 of the outer chipper 82 is bonded to or adjacent to the outboard surface 80 of the inner chipper 72. In this manner, the outer chipper 82 is also bonded to or adjacent to the carcass ply main portion 60 on the internal or axially inner side of the bead apex 64, thereby forming a multi-layer structure on the internal side of the bead apex.

The radially inward end 74 of the inner chipper 72 is disposed radially outwardly of the bead core 54 and the inner chipper extends past the turn up outward end 66, so that the radially outward end 76 of the inner chipper is disposed radially outwardly of the outward end of the turn up 62. The radially inward end 84 of the outer chipper 82 is also disposed radially outwardly of the bead core 54 and the outer chipper extends past the turn up outward end 66, so that the radially outward end 86 of the outer chipper is disposed radially outwardly of the outward end of the turn up 62.

The outer chipper 82 preferably is of a shorter length than the inner chipper 72. The radially inward end 84 of the outer chipper 82 is disposed radially outwardly of the radially inward end 74 of the inner chipper 72 by a distance of at least 5 millimeters (mm) or by a distance in a range of from 5 mm to 20 mm. Likewise, the radially outward end 86 of the outer chipper 82 preferably is disposed radially inwardly of the radially outward end 76 of the inner chipper 72 by a distance of at least 5 mm or in a range of from 5 to 20 mm.

The inner chipper 72 comprises or is formed of an elastomer or polymer compound known to those skilled in the art.

The outer chipper 82 may comprise or be formed of the same elastomer or polymer compound as the inner chipper 72, or may comprise or be formed of a different elastomer or polymer compound.

Both the inner chipper 72 and the outer chipper 82 are reinforced with preferably substantially inextensible cords. Preferably, the cords are made of steel having a mesh or arrangement of parallel cords with of from 8 to 18 ends per 2.54 cm, and more preferably from 12 to 16 ends per 2.54 cm.

The cord gauge or wire cord gauge of each chipper 72 and 82 is preferably in a range of from 0.6 mm to 1.5 mm.

Alternatively, the cords in each chipper 72 and 82 may be made of a polyamide monofilament cord of any cross-sectional shape, such as round, oval or star.

The cords of each chipper 72, 82 are preferably oriented at an angle in a range of from 25 degrees to 85 degrees with respect to the radially oriented cords, preferably steel cords, that reinforce the carcass ply 58. More preferably, the cords of each chipper 72 and 82 are oriented in a range of from 25 to 45 degrees.

The inner chipper 72 and the outer chipper 82, when assembled as shown, preferably have generally equal, but oppositely oriented cord angles.

Employing both chippers 72 and 82 and preferably having their cord angles biased oppositely at the locations where they are joined limits the bending of the bead area 52. Such limitation of the bending of the bead area 52 in turn limits or lowers the forces that act on the carcass ply turn up 62.

In this manner, the tire 50 of the present invention provides a structure in which forces due to deflection in the bead area 52 are limited by the inner chipper 72 and the outer chipper 82. Such limitation of forces by the outer chipper 72 and the inner chipper 82 lowers shear stresses along the carcass ply turn up 62. Lowering or reducing the stresses in the carcass ply turn up 62 enables the tire 50 to resist fatigue cracking in the bead area 52, thereby improving the durability of the bead area.

The pneumatic radial tire of the invention 50 thus includes a layered chipper structure 72, 82 axially inwardly of the bead apex 64 that improves the durability of the respective bead areas 52 of the tire and the life of the tire. In the tire of the present invention 50, an advantage includes increased bead durability under heavy loads or high heat conditions, as is seen in vehicles such as buses, tractors and medium truck tires designed for heavy loads. Such tires 50 typically have large rim diameters of 20 inches (508 mm) or greater, and are designed to be retreaded such that the bead portions of the carcass 20 may be exposed to many hundreds of thousands of kilometers. The ability to provide a more durable bead portion or area 52 as accomplished by the tire of the present invention 50 thereby also provides a longer-lasting tire carcass 20.

The present invention also includes a method of forming a tire 50 with improved durability of the bead area 52. The method includes steps in accordance with the description that is presented above and shown in FIG. 3.

It is to be understood that the structure of the above-described tire 50 may be altered or rearranged, or components or steps known to those skilled in the art omitted or added, without affecting the overall concept or operation of the invention. For example, the teachings herein are applicable to a broad range of tires and may be useful in tire lines such as, but not limited to, passenger tires, radial medium truck tires, aircraft tires, and off-the-road tires, run-flat tires, and the like. Moreover, the invention applies to tires formed with any type of belt structure or tread configuration.

## Claims

1. A pneumatic radial tire, the tire (50) comprising:
a pair of opposing bead areas (52), wherein each bead area (52) includes a bead core (54) and a bead apex (64);
at least one carcass reinforcing ply (58), the reinforcing ply (58) including a turn up portion (62) at each bead core (54), each turn up portion (62) including a radially outward end (66);
a pair of chippers (72, 82) disposed axially inwardly of one or each turn up portion outward end (66), the pair of chippers (72, 82) including a first chipper (72) and a second chipper (82);
wherein the first chipper (72) is disposed axially inwardly of the respective bead apex (64) and the second chipper (82) is disposed axially outwardly of the first chipper (72) and axially inwardly of the respective bead apex (64);
wherein an inboard surface (88) of the second chipper (82) is bonded to an outboard surface (80) of the first chipper (72);
wherein a radially inward end (74) of the first chipper (72) is disposed radially outwardly of the bead core (54) and the first chipper (72) extends past the turn up portion radially outward end (66); and
wherein a radially inward end (84) of the second chipper (82) is disposed radially outwardly of the bead core (54) and the second chipper (82) extends past the turn up portion radially outward end (66);
**characterized in that** the radially inward end (84) of the second chipper (82) is disposed radially outwardly of the radially inward end (74) of the first chipper (72) by a radial distance of at least 5 millimeters.

2. The pneumatic radial tire of claim 1, wherein an inboard surface (78) of the first chipper (72) is bonded to an outboard surface (92) of a main portion (60) of the carcass reinforcing ply (58).

3. The pneumatic radial tire of at least one of the previous claims, wherein the second chipper (82) has a length in the radial direction that is shorter than the length of the first chipper (72) in the radial direction.

4. The pneumatic radial tire of at least one of the previous claims, wherein a radially outward end (86) of the second chipper (82) is disposed radially inwardly of a radially outward end (76) of the first chipper (72) by a radial distance of at least 5 millimeters.

5. The pneumatic radial tire of at least one of the previous claims, wherein the first and the second chipper (72, 82) are reinforced with cords, preferably substantially inextensible cords.

6. The pneumatic radial tire of at least one of the previous claims, wherein the cords in the first chipper (72) and in the second chipper (82) have generally equal, but oppositely oriented cord angles.

7. The pneumatic radial tire of at least one of the previous claims, wherein the tire (50) is a truck tire that has a nominal bead diameter of at least 508 mm.

## Patentansprüche

1. Luftradialreifen, wobei der Reifen (50) Folgendes umfasst:
ein Paar von gegenüberliegenden Wulstbereichen (52), wobei jeder Wulstbereich (52) einen Wulstkern (54) und einen Wulstkernreiter (64) beinhaltet;
wenigstens eine Gewebeverstärkungseinlage (58), wobei die Verstärkungseinlage (58) einen Umschlagsabschnitt (62) an jedem Wulstkern (54) beinhaltet, wobei jeder Umschlagsabschnitt (62) ein radial nach außen führendes Ende (66) beinhaltet;
ein Paar von Wulststärkungen (72, 82), die axial nach innen führend von einem oder jedem Umschlagsabschnitt (66) angeordnet sind, wobei das Paar von Wulststärkungen (72, 82) eine erste Wulststärkung (72) und eine zweite Wulststärkung (82) beinhaltet;
wobei die erste Wulststärkung (72) axial nach innen führend von der jeweiligen Wulstspitze (64) angeordnet ist und die zweite Wulststärkung (82) axial nach außen führend von der ersten Wulststärkung (72) und axial nach innen führend von der jeweiligen Wulstspitze (64) angeordnet ist;
wobei eine innenliegende Oberfläche (88) der zweiten Wulststärkung (82) mit einer außenliegenden Oberfläche (80) der ersten Wulststärkung (72) verbunden ist;
wobei ein radial nach innen führendes Ende (74) der ersten Wulststärkung (72) radial nach außen führend von dem Wulstkern (54) angeordnet ist und die erste Wulststärkung (72) sich an dem radial nach außen führenden Ende (66) des Umschlagsabschnitts vorbei erstreckt; und
wobei ein radial nach innen führendes Ende (84) der zweiten Wulststärkung (82) radial nach außen führend von dem Wulstkern (54) angeordnet ist und die zweite Wulststärkung (82) sich an dem radial nach außen führenden Ende (66) des Umschlagsabschnitts vorbei erstreckt;
**dadurch gekennzeichnet, dass** das radial nach innen führende Ende (84) der zweiten Wulststärkung (82) radial nach außen führend von dem radial nach innen führenden Ende (74) der ersten Wulststärkung (72) um einen radialen Abstand von wenigstens 5 Millimetern angeordnet ist.

2. Luftradialreifen nach Anspruch 1, wobei eine innenliegende Oberfläche (78) der ersten Wulststärkung (72) mit einer außenliegenden Oberfläche (92) eines Hauptabschnitts (60) der Gewebeverstärkungseinlage (58) verbunden ist.

3. Luftradialreifen nach wenigstens einem der vorhergehenden Ansprüche, wobei die zweite Wulststärkung (82) eine Länge in der radialen Richtung aufweist, die kürzer als die Länge der ersten Wulststärkung (72) in der radialen Richtung ist.

4. Luftradialreifen nach wenigstens einem der vorhergehenden Ansprüche, wobei ein radial nach außen führendes Ende (86) der zweiten Wulststärkung (82) radial nach innen führend von einem radial nach außen führenden Ende (76) der ersten Wulststärkung (72) um einen radialen Abstand von wenigstens 5 Millimetern angeordnet ist.

5. Luftradialreifen nach wenigstens einem der vorhergehenden Ansprüche, wobei die erste und die zweite Wulststärkung (72, 82) mit Korden, vorzugsweise im Wesentlichen undehnbaren Korden, verstärkt sind.

6. Luftradialreifen nach wenigstens einem der vorhergehenden Ansprüche, wobei die Korde in der ersten Wulststärkung (72) und in der zweiten Wulststärkung (82) im Allgemeinen gleiche, aber gegenüberliegend ausgerichtete Kordwinkel aufweisen.

7. Luftradialreifen nach wenigstens einem der vorhergehenden Ansprüche, wobei der Reifen (50) ein LKW-Reifen ist, der einen nominalen Wulstdurchmesser von wenigstens 508 mm aufweist.

## Revendications

1. Bandage pneumatique du type à nappe radiale, le bandage pneumatique (50) comprenant :
une paire de zones opposées qui correspondent aux talons (52), dans lequel chaque zone (52) qui correspond au talon englobe une tringle de talon (54) et un bourrage sur tringle (64) ;
au moins une nappe de renforcement de carcasse (58), la nappe de renforcement (58) englobant une portion de retournement vers le haut (62) à chaque tringle de talon (54), chaque portion de retournement vers le haut (62) englobant une extrémité externe (66) en direction radiale ;
une paire de renforts d'appui (72, 82) qui sont disposés à l'intérieur, en direction axiale, de l'extrémité externe (66) d'une portion de retournement vers le haut ou de chaque portion de retournement vers le haut, la paire de renforts d'appui (72, 82) englobant un premier renfort d'appui (72) et un deuxième renfort d'appui (82) ;
dans lequel le premier renfort d'appui (72) est disposé à l'intérieur en direction axiale du bourrage sur tringle respectif (64) et le deuxième renfort d'appui (82) est disposé à l'extérieur en direction axiale du premier renfort d'appui (72) et à l'intérieur en direction axiale du bourrage sur tringle respectif (64) ;
dans lequel une surface interne (88) du deuxième renfort d'appui (82) est collée à une surface externe (80) du premier renfort d'appui (72) ;
dans lequel une extrémité interne en direction radiale (74) du premier renfort d'appui (72) est disposée à l'extérieur en direction radiale de la tringle de talon (54) et le premier renfort d'appui (72) s'étendant au-delà de l'extrémité externe en direction radiale (66) de la portion de retournement vers le haut ; et
dans lequel une extrémité interne en direction radiale (84) du deuxième renfort d'appui (82) est disposée à l'extérieur en direction radiale de la tringle de talon (54) et le deuxième renfort d'appui (82) s'étend au-delà de l'extrémité externe en direction radiale (66) de la portion de retournement vers le haut ;
**caractérisé en ce que** l'extrémité interne en direction radiale (84) du deuxième renfort d'appui (82) est disposée à l'extérieur en direction radiale de l'extrémité interne en direction radiale (74) du premier renfort d'appui (72) sur une distance radiale d'au moins 5 mm.

2. Bandage pneumatique du type à nappe radiale selon la revendication 1, dans lequel une surface interne (78) du premier renfort d'appui (72) est collée à une surface externe (92) d'une portion principale (60) de la nappe de renforcement de carcasse (58).

3. Bandage pneumatique du type à nappe radiale selon au moins une des revendications précédentes, dans lequel le deuxième renfort d'appui (82) possède une longueur dans la direction radiale qui est plus courte que la longueur du premier renfort d'appui (72) dans la direction radiale.

4. Bandage pneumatique du type à nappe radiale selon au moins une des revendications précédentes, dans lequel une extrémité externe en direction radiale (86) du deuxième renfort d'appui (82) est disposée à l'intérieur en direction radiale d'une extrémité externe en direction radiale (76) du premier renfort d'appui (72), sur une distance radiale d'au moins 5 mm.

5. Bandage pneumatique du type à nappe radiale selon au moins une des revendications précédentes, dans lequel le premier et le deuxième renfort d'appui (72, 82) sont renforcés avec des câblés, de préférence des câblés essentiellement inextensibles.

6. Bandage pneumatique du type à nappe radiale selon au moins une des revendications précédentes, dans lequel les câblés dans le premier renfort d'appui (72) et dans le deuxième renfort d'appui (82) possèdent des angles de câblés généralement égaux, mais d'orientations opposées.

7. Bandage pneumatique du type à nappe radiale selon au moins une des revendications précédentes, dans lequel le bandage pneumatique (50) est un bandage pneumatique pour camion qui possède un diamètre de talon nominal qui s'élève à au moins 508 mm.
